# EUROPÄISCHE PATENTSCHRIFT

(11) **EP 2 742 234 B1**
(45) Veröffentlichungstag und Bekanntmachung des Hinweises auf die Patenterteilung: **17.01.2018**
(21) Anmeldenummer: 12748165.3
(22) Anmeldetag: 02.08.2012
(51) Int. Cl.: F03D 1/06

(54) **VERFAHREN ZUM HERSTELLEN EINES ROTORBLATTS EINER WINDENERGIEANLAGE, STEGPAKET, ROTORBLATT UND WINDENERGIEANLAGE**
METHOD FOR MANUFACTURING A ROTOR BLADE OF A WIND POWER PLANT, WEB PACKAGE, ROTOR BLADE AND WIND POWER PLANT
PROCÉDÉ DE FABRICATION D'UNE PALE D'UNE ÉOLIENNE, ENSEMBLE D'ÉLÉMENTS DE LIAISON, PALE ET ÉOLIENNE

(30) Priorität: 12.08.2011 DE 102011080869
(43) Veröffentlichungstag der Anmeldung: 18.06.2014
(73) Patentinhaber: Senvion GmbH, 22297 Hamburg (DE)
(72) Erfinder: ZELLER, Lenz, Simon, 24114 Kiel (DE)
(74) Vertreter: Seemann & Partner Patentanwälte mbB
(86) Internationale Anmeldenummer: PCT/EP2012/003296
(87) Internationale Veröffentlichungsnummer: WO 2013/023745

(56) Entgegenhaltungen:
- WO-A1-2009/155920
- WO-A2-2008/089765
- WO-A2-2010/100066
- DE-A1-102008 022 548
- DE-A1-102009 040 515

## Beschreibung

Die Erfindung betrifft ein Verfahren zum Herstellen eines Rotorblatts einer Windenergieanlage, wobei das Rotorblatt aus Halbschalen für eine Saugseite und eine Druckseite hergestellt wird, die im Inneren des Rotorblatts durch wenigstens zwei in Längsrichtung des Rotorblatts verlaufende Stege miteinander verbunden werden, wobei die Stege zunächst auf einer ersten Halbschale positioniert und mit der ersten Halbschale verklebt werden und anschließend das Rotorblatt geschlossen wird, wobei eine zweite Halbschale auf die erste Halbschale mit den Stegen oder die erste Halbschale mit den Stegen auf die zweite Halbschale aufgesetzt wird, die Halbschalen miteinander verklebt werden und die Stege mit der zweiten Halbschale verklebt werden. Die Erfindung betrifft ferner ein Stegpaket, ein Rotorblatt einer Windenergieanlage sowie eine Windenergieanlage.

Rotorblätter für Windenergieanlagen werden üblicherweise in einer Schalenbauweise gefertigt, wobei in verschiedenen Formen bzw.

Teilformen Schalenteile hergestellt werden, die nach dem Aushärten in ihren Teilformen zusammengesetzt und miteinander verbunden werden. Schalen von Rotorblättern werden üblicherweise aus faserverstärkten Kunststoffen, beispielsweise glasfaserverstärkten Polyesterharzen oder Epoxidharzen, hergestellt, die in entsprechende Teilformen eingelegt und anschließend ausgehärtet werden. Bei dem so genannten Harzinfusionsverfahren werden Fasergelege von trockenen Glasfasern oder Kohlefasern in die Form eingelegt und das zähflüssige Harz unter Unterdruck eingesogen, so dass es die Zwischenräume zwischen den Fasern der Fasergelege ausfüllt. Anschließend härtet das Harz aus, so dass die Schale des Rotorblatts entsteht.

Die Halbschalen, die auch ihrerseits wieder segmentiert sein können, werden nach ihrer jeweiligen Herstellung aufeinander gesetzt und miteinander verklebt, um das Rotorblatt herzustellen. Die Halbschalen werden im Rotorblattinneren durch zwei oder mehr in Längsrichtung des Rotorblatts verlaufende Stege miteinander verbunden, die Zugkräfte zwischen den Halbschalen im Betrieb aufnehmen und damit die aerodynamische Form des Rotorblatts im Betrieb stabilisieren.

Eine übliche Vorgehensweise zum Einbringen in das Rotorblatt besteht darin, dass die Stege zunächst an die gewünschte Position in einer Halbschale gebracht werden, dort positioniert werden und mit der Halbschale verklebt werden. Dies geschieht beispielsweise mittels einer Positioniervorrichtung. Diese ergreift die einzelnen Stege und setzt sie in die gewünschte Position in die untere Halbschale ein. An den Stellen, an denen die Stege mit ihren Stegfüßen in der Halbschale befestigt werden sollen, ist die Halbschale bereits mit einem Kleber versehen und die Stege werden mittels der Stegpositioniervorrichtung in den Kleber eingeführt bzw. eingedrückt. Dies bedeutet auch, dass überschüssiger Kleber zu den Seiten der Stegfüße herausquillt und ggf. entfernt werden muss. Eine alternative Möglichkeit der Verklebung der Stegfüße mit der Halbschale ist in DE 10 2010 042 327.0 der Anmelderin beschrieben, worin in einem Kleberinjektionsverfahren zunächst ein Steg mittels einer Stegpositioniervorrichtung an der gewünschten Stelle schwebend über der Halbschale positioniert wird und in den Zwischenraum zwischen dem Stegfuß und der Halbschale Kleber eingespritzt wird. Diese Methode ist besonders klebstoffsparend.

Im weiteren Verlauf der Herstellung des Rotorblatts wird nach dem Aushärten der Klebverbindung zwischen den Stegfüßen und der unteren Halbschale die Stegpositioniervorrichtung entfernt, so dass die Stege nunmehr frei in der Halbschale stehen. Anschließend wird die zweite Halbschale auf die Halbschale mit den darin stehenden Stegen abgesenkt und mit dieser sowie mit den oberen Stegfüßen der Stege verklebt. Alternativ hierzu kann auch die Halbschale mit den eingeklebten Stegen aus ihrer Form entnommen werden, gedreht werden und auf die andere Halbschale aufgesetzt werden. Dabei kann Klebstoff entweder auf den freien Flächen der Stegfüße aufgetragen sein oder auf die Stellen in der noch leeren Halbschale, an die die Stegfüße angeklebt werden sollen.

Das Verkleben der Halbschalen miteinander wird auch das "Schließen" des Rotorblatts genannt. Bei diesem Schließvorgang stehen oder hängen die Hauptstege frei in der Schale und können dadurch individuell in Profilrichtung auf der zu verklebenden Seite verrutschen, indem sie entweder bereits vor dem Schließen des Rotorblatts verkippen, oder indem sie bei Kontaktieren des viskosen Klebstofffilms zwischen Halbschale und Stegfuß auf dem geneigten Profil des Rotorblatts unter Druck verrutschen. Dabei werden in einigen Fällen die vorgegebenen Toleranzen überschritten.

WO 2010/100066 A2 betrifft eine Windkraftanlage mit einem Rotor, der wenigstens ein Rotorblatt aufweist, das mittels Umformtechnik hergestellt ist. Es ist eine Versteifungsstruktur in Form eines querverstrebten umlaufenden Holmkastens vorgesehen, die in einer Unterschale eingelegt wird, bevor das Rotorblatt mit der Oberschale verschlossen wird. Die Versteifungsstruktur führt zu einer intensiven Aussteifung des Hohlprofils des Rotorblatts und kann zur Befestigung an der Rotornabe dienen.

In DE 10 2008 022 548 A1 ist ein Rotorblatt für eine Windenergieanlage beschrieben, mit zwei entlang ihrem Umfang miteinander verbundenen Schalenhälften und wenigstens einer zwischen den Schalenhälften angeordneten und mit diesen verbundenen Stegeinrichtung, wobei die Stegeinrichtung zwei Stegelemente aufweist, die jeweils zwei Stegschenkel und jeweils eine Querverbindung zwischen den zwei Stegschenkeln besitzen. Von jedem Stegelement sind die Enden der Stegschenkel mit genau einer Schalenhälfte verbunden und die Querverbindungen der Stegelemente miteinander.

WO 2009/155920 A1 betrifft ein verstärktes Rotorblatt einer Windenergieanlage mit einem dritten Steg, der in Richtung des hinteren Blattendes eingebaut ist.

Die Aufgabe der vorliegenden Erfindung besteht demgegenüber darin, Windenergieanlagen und Rotorblätter für Windenergieanlagen zur Verfügung zu stellen, sowie ein Verfahren zu deren Herstellung und Hilfsmittel dazu, bei denen die Stege mit hoher Sicherheit innerhalb der vorgegebenen Toleranzen zwischen den Halbschalen des Rotorblatts positioniert und verklebt sind.

Die Aufgabe wird durch ein Verfahren zum Herstellen eines Rotorblatts einer Windenergieanlage gelöst, wobei das Rotorblatt aus Halbschalen für eine Saugseite und eine Druckseite hergestellt wird, die im Inneren des Rotorblatts durch wenigstens zwei in Längsrichtung des Rotorblatts verlaufende Stege miteinander verbunden werden, wobei die Stege zunächst auf einer ersten Halbschale positioniert und mit der ersten Halbschale verklebt werden und anschließend das Rotorblatt geschlossen wird, wobei eine zweite Halbschale auf die erste Halbschale mit den Stegen oder die erste Halbschale mit den Stegen auf die zweite Halbschale aufgesetzt wird, die Halbschalen miteinander verklebt werden und die Stege mit der zweiten Halbschale verklebt werden, das dadurch weitergebildet wird, dass die Stege mittels einer Mehrzahl von Querverbindungseinrichtungen zu einem verkippungsstabilen Stegpaket verbunden werden, bevor die Stege auf der ersten Halbschale positioniert werden, wobei einige oder alle Querverbindungseinrichtungen nach dem Schließen des Rotorblatts wieder entfernt werden.

Die Erfindung beruht auf dem Grundgedanken, dass durch die Erzeugung eines Stegpakets mit Querverbindungseinrichtungen die Stege vor einem Verkippen dadurch geschützt werden, dass diese gegeneinander verkippsicher abgestützt werden. Dadurch stehen die Stege auch dann noch in ihrer Sollposition innerhalb der vorgegebenen Toleranzen, wenn eine Stegpositioniervorrichtung, mit der sie zuvor in die erste Halbschale eingesetzt worden sind, wieder entfernt worden ist. Insbesondere können die Stege im Stegpaket in ihrer querverbundenen Form den mechanischen Belastungen verkippsicher widerstehen, die dadurch auftreten, dass die eine Halbschale auf die andere Halbschale aufgesetzt wird. Durch die Querverbindung im Stegpaket führt dies nicht mehr zu einer Verkippung der Stege bei diesem Vorgang. Auf diese Weise werden die vorgegebenen Toleranzen in der Stegpositionierung bei der Herstellung des Rotorblatts eingehalten.

Die Verbindung der Stege zu einem Stegpaket erfolgt bevor die Stege auf der ersten Halbschale positioniert werden.

Im Rahmen der vorliegenden Erfindung ist es umfasst, dass die Halbschale der Druckseite die erste Halbschale ist oder die Halbschale der Saugseite die erste Halbschale ist, in die die Stege zuerst eingesetzt werden. Beides hat prozesstechnische Vorteile. Eine Positionierung in der Halbschale, die bei dem Schließen zuunterst bleibt, ist für die Klebstoff sparende Kleberinjektionstechnik besonders geeignet, da die Stegfüße besser zugänglich sind, außerdem kann ein Teil des beim Schließen herausgedrückten und herabgetropften Klebers mit Hilfe einer Folie aus dem Rotorblatt einfach entfernt werden. Da die Halbschale in ihrer Form verbleibt, ist außerdem eine gute Reproduzierbarkeit des Klebespaltes gewährleistet.

Der umgekehrte Fall des Einsatzes der Stege in die Halbschale, die zum Schließen des Rotorblatts gedreht wird, hat die Vorteile, dass keine Kleberstalaktiten bei der Blattverklebung entstehen, die später abbrechen können. Außerdem ist diese Halbschale früher fertig als die unten verbleibende Halbschale, so dass die Wartezeit für das Einsetzen der Stege genutzt werden kann. Dies ergibt einen Zeitvorteil von einer oder mehreren Stunden. Da die Stegfüße jeweils in der unteren Position angeklebt werden, wird das Anlaminieren im Flanschbereich erleichtert, da nicht über Kopf gearbeitet werden muss.

Da die Querverbindungseinrichtungen ein zusätzliches Gewicht darstellen, ist erfindungsgemäß vorgesehen, dass einige oder alle Querverbindungseinrichtungen nach dem Schließen des Rotorblatts wieder entfernt werden. Dies gilt insbesondere für die blattwurzelnahen Bereiche des Rotorblatts, die für menschliches Personal zugänglich sind. Im blattspitzenseitigen Bereich des Rotorblatts ist die Steghöhe und das Steggewicht im Allgemeinen relativ gering, so dass nur eine geringe Anzahl von Querverbindungseinrichtungen in diesem Bereich anzusetzen ist, die üblicherweise aufgrund der im Blattspitzenbereich beengten Platzverhältnisse im Rotorblatt verbleiben. In einer vorteilhaften Weiterbildung ist vorgesehen, dass in diesem Bereich die Verbindungen zwischen den Querverbindungselementen und den Stegen durch Ferneinwirkung, entweder durch Funk oder durch Seilzüge oder Ähnliches, gelöst werden und die Querverbindungselemente mit Zugleinen beispielsweise anschließend aus dem Rotorblatt entfernbar sind.

In einer vorteilhaften Ausführungsform werden die Stege gemeinsam als miteinander verbundenes Stegpaket mittels einer Stegpositioniervorrichtung in der ersten Halbschale positioniert, wobei insbesondere die Herstellung des Stegpakets außerhalb des Rotorblatts erfolgt. Dies hat den weiteren Vorteil, dass die Stegpositioniervorrichtung vergleichsweise einfach ausgebildet sein kann, da sie nur noch das Stegpaket anstelle der einzelnen Stege erfassen, transportieren und positionieren muss. Die Querverbindungseinrichtungen dienen hierbei vorzugsweise als Angriffspunkte für die Positioniervorrichtung. Die korrekte relative Positionierung der Stege zueinander wird im Stegpaket bereits hergestellt.

Die Halbschalen des Rotorblatts umfassen in Längsrichtung des Rotorblatts angeordnete Blattgurte, die mit den Halbschalen verbunden sind und die auf das Rotorblatt im Betrieb der Windenergieanlage einwirkenden Kräfte aufnehmen und in Richtung zur Blattwurzel und zur Rotornabe hin ableiten. Die Verklebung der Stege mit den Halbschalen erfolgt daher vorzugsweise als Verklebung mit in Längsrichtung der Halbschalen angeordneten Blattgurten. Dies stellt eine besonders geeignete und bruchsichere Positionierung der Stege in den Halbschalen dar.

Die Verklebung des Stegpakets kann, muss aber nicht vollständig ausgehärtet sein, bevor das Rotorblatt verklebt wird. Im Rahmen der Erfindung sind somit eine Nass-in-Nass-Verklebung bzw. eine schwimmende Blattverklebung mit umfasst, wobei in einem solchen Fall vorzugsweise noch Stützelemente verwendet werden, um die Stege zusätzlich vor einem Verkippen zu sichern.

Die der Erfindung zugrunde liegende Aufgabe wird auch durch ein Stegpaket für ein Rotorblatt einer Windenergieanlage, umfassend wenigstens zwei in Längsrichtung des Rotorblatts verlaufende Stege und eine Mehrzahl von Querverbindungseinrichtungen, mit denen die Stege verkippsicher miteinander verbunden oder verbindbar sind, gelöst, wobei wenigstens ein Teil der Querverbindungseinrichtungen und die Stege miteinander lösbar verbindbar ausgestaltet sind, wobei wenigstens ein Teil der Querverbindungseinrichtungen Haltemittel für eine Stegpositioniervorrichtung aufweist. Dieses Stegpaket ist insbesondere herstellbar in einem oben beschriebenen erfindungsgemäßen Verfahren. Die Herstellung erfolgt außerhalb des Rotorblatts oder innerhalb der ersten Halbschale des Rotorblatts. Das Stegpaket hat den Vorteil, dass die Positionierung der Stege in der ersten Halbschale sowie beim Verschließen des Rotorblatts fixiert ist und ein Verkippen und somit ein Überschreiten der Toleranzen verhindert wird.

Vorzugsweise sind die Verbindungen mittels Saugnäpfen, Schrauben, Bolzen und/oder Haken und Ösen hergestellt oder herstellbar, insbesondere mit an- oder einlaminierten Verbindungseinrichtungen, Sacklöchern und/oder durchgehenden Öffnungen an und/oder in den Stegen. Diese Verbindungsmittel stellen lösbare Verbindungsmittel dar, wobei insbesondere die Verbindung mittels Saugnäpfen eine besonders einfache Möglichkeit der Verbindung darstellt, die außerdem die strukturelle Integrität der Stege vollständig intakt lässt.

Für den Fall, dass das Stegpaket außerhalb des Rotorblatt gefertigt wird und als Stegpaket in die erste Halbschale eingesetzt wird, sind auch die Saugnäpfe stark genug, um es zu ermöglichen, dass eine Positioniervorrichtung, beispielsweise in Form einer Krananlage, das Stegpaket an den Querverbindungseinrichtungen erfasst und anhebt. Das Gewicht einzelner Stege in modernen Rotorblättern mit Längen von 50 m oder mehr beträgt einige hundert Kilogramm, insbesondere bis zu 750 kg. Bei einer ausreichenden Anzahl von Querverbindungselementen und somit einer ausreichenden Anzahl von Saugnäpfen ist die auf den einzelnen Saugnapf entfallende aufzunehmende Gewichtskraft des Stege innerhalb der Designparameter moderner Saugnäpfe. Auch mit einer solchen Verbindung können daher Stegpakete sicher angehoben und in einer Halbschale positioniert werden.

Auch eine Verbindung mittels Schrauben oder Bolzen in Sacklöchern und oder durchgehenden Öffnungen durch Stege stellt eine sichere Art der lösbaren Verbindung dar. Bolzen gehen üblicherweise in Streben über und werden beidseitig des Steges mittels Muttern und ggf. Unterlegscheiben auf einem oder mehreren mit Außengewinden versehenen Abschnitten der Bolzen gesichert.

Alternativ oder zusätzlich hierzu ist vorzugsweise vorgesehen, dass wenigstens ein Teil der Querverbindungseinrichtungen fest mit den Stegen verbunden ist, insbesondere mittels Verkleben und/oder An- oder Einlaminieren. Dies geschieht insbesondere im blattspitzenseitigen Bereich des Rotorblatts, in dem ein Lösen der Verbindungen schwierig ist. In diesem Bereich sind die Querverbindungseinrichtungen sowie die Verbindungsmittel zur Verbindung der Querverbindungseinrichtungen mit den Stegen insbesondere aus leichten Materialien gefertigt, beispielsweise Kunststoff. Da die Stege im blattspitzenseitigen Bereich relativ niedrig sind und somit wenig Gewicht haben, sind solche Materialien auch als Querverbindungseinrichtungen in diesem Bereich gut geeignet.

Die Querverbindungseinrichtungen sind vorzugsweise als Metallstreben, Kunststoffstreben, Abstandhalter aus Metall oder Kunststoff und/oder als rechteckige oder taillierte Flachkörper ausgebildet, insbesondere als Sandwichplatten mit Faserverbundstoffen und Kernmaterial. Solche zuletzt genannten Sandwichplatten entsprechen in ihrem Aufbau insbesondere dem Querschnitt der Stege, die ebenfalls aus einem Kernmaterial, beispielsweise aus PET-Schaum oder PVC-Schaum und außen liegenden Laminatlagen aus Faserverbundstoffen aufgebaut sind. Im Blattwurzelbereich besteht das Kernmaterial der Stege in einigen Fällen teilweise auch aus Balsaholz, um die Festigkeit des Steges in diesem Bereich zu erhöhen. Unter einer taillierten Form wird insbesondere im Rahmen der vorliegenden Erfindung auch eine Form verstanden, in der eine Strebe oder ein schmaler Flachkörper in "T"-Füßen endet, die flächig mit den Stegflächen verbunden werden, wobei die "T"-Form ein Verkippen der Stege verhindert.

Vorzugsweise wird zur Sicherung gegen eine Verkippung der Stege wenigstens ein Teil der Querverbindungseinrichtungen, insbesondere Streben, im Wesentlichen diagonal und/oder kreuzweise diagonal zwischen den Stegen angeordnet. Dies stellt insbesondere eine Alternative zu taillierten oder rechteckigen Flachkörpern dar. Beide Arten von Querverbindungseinrichtungen werden erfindungsgemäß auch gemeinsam verwendet.

Erfindungsgemäß weist wenigstens ein Teil der Querverbindungseinrichtungen Haltemittel für eine Stegpositioniervorrichtung auf. Die Haltemittel können Ösen, Löcher, Sacklöcher, Haken oder ähnliche bekannte Haltemittel sein, in die korrespondierende Haltemittel der Stegpositioniervorrichtung eingreifen. Darunter wird im Rahmen der Erfindung auch eine Steghaltevorrichtung, beispielsweise eine Hebetraverse, verstanden.

In einer vorteilhaften Weiterbildung ist zusätzlich zu zwei Hauptstegen ein dritter Steg umfasst, der zur Profilhinterkante hin angeordnet ist und im Wesentlichen parallel zu den Hauptstegen verläuft. Ein solcher auch "Trailing Edge Panel Web" (TEP-Steg) genannter Steg ist im hinteren Bereich des Profils eines Rotorblatts in einem Abschnitt angeordnet, in dem die Sehne zwischen Profilvorderkante und Profilhinterkante besonders lang ist und daher eine zusätzliche Stabilisierung zwischen Halbschale für die Saugseite und Halbschale für die Druckseite nötig ist. Ein solcher TEP-Steg kann entweder einzeln im Rotorblatt positioniert werden, wobei insbesondere eigene Stützvorrichtungen vorgesehen sind, die den TEP-Steg gegenüber der unteren Halbschale abstützen, oder der TEP-Steg ist Teil des erfindungsgemäßen Stegpakets.

Die der Erfindung zugrunde liegende Aufgabe wird auch durch ein Rotorblatt einer Windenergieanlage mit einem erfindungsgemäßen zuvor beschriebenen Stegpaket gelöst, das insbesondere hergestellt oder herstellbar ist in einem erfindungsgemäßen zuvor beschriebenen Verfahren.

Schließlich wird die Aufgabe auch durch eine entsprechende Windenergieanlage mit einem oder mehreren zuvor beschriebenen erfindungsgemäßen Rotorblättern gelöst.

Den Erfindungsgegenständen ist gemeinsam, dass eine die vorgegebenen Toleranzen einhaltende Positionierung der Stege im fertigen Rotorblatt sichergestellt ist, womit eine gleichbleibende Qualität bei der Rotorblattherstellung und bei den fertigen Rotorblättern gewährleistet wird.

Die zu den genannten Erfindungsgegenständen, d.h. dem Verfahren, dem Stegpaket, dem Rotorblatt und der Windenergieanlage genannten Merkmale, Vorteile und Eigenschaften gelten ohne Einschränkungen auch für die jeweils anderen Erfindungsgegenstände, da sie sich aufeinander beziehen.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Darstellung einer Windenergieanlage,
- Fig. 2: eine schematische Darstellung einer Draufsicht auf ein Rotorblatt,
- Fig. 3: eine schematische Querschnittsdarstellung durch ein Rotorblatt,
- Fig. 4: eine schematische Querschnittsdarstellung durch ein Rotorblatt bei seiner Herstellung mit einem erfindungsgemäßen Stegpaket,
- Fig. 5: eine schematische Querschnittsdarstellung durch ein erfindungsgemäßes Stegpaket,
- Fig. 6: eine schematische Seitenansicht eines weiteren erfindungsgemäßen Stegpakets,
- Fig. 7a) bis 7c): schematische Darstellungen von Varianten von Verbindungsmitteln sowie
- Fig.8: eine schematische Perspektivdarstellung einer unteren Halbschale mit einem TEP-Steg.

In den Zeichnungen sind jeweils gleiche oder gleichartige Elemente und/oder Teile mit denselben Bezugsziffern versehen, so dass von einer erneuten Vorstellung jeweils abgesehen wird.

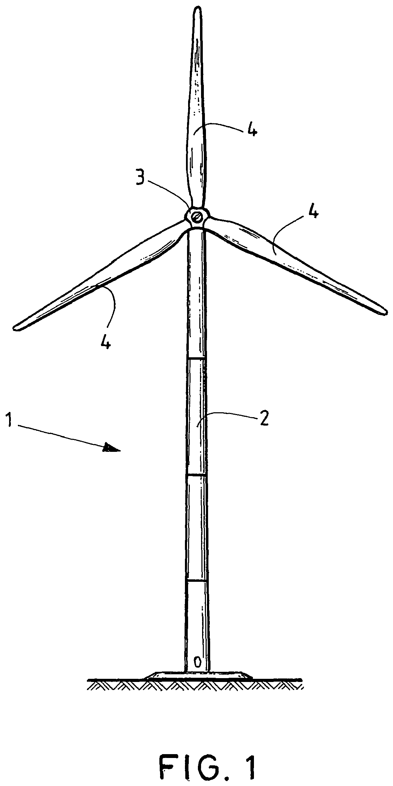

In Fig. 1 ist eine Windenergieanlage 1 schematisch dargestellt. Die Windenergieanlage 1 verfügt über einen Turm 2, an dessen Spitze an einem nicht dargestellten Maschinengehäuse bzw. einer Maschinengondel eine Rotornabe 3 mit drei Rotorblättern 4 angeordnet ist. Der aus Rotornabe 3 und Rotorblättern 4 bestehende Rotor der Windenergieanlage 1 ist über eine im Wesentlichen horizontal ausgerichtete Drehachse drehbar.

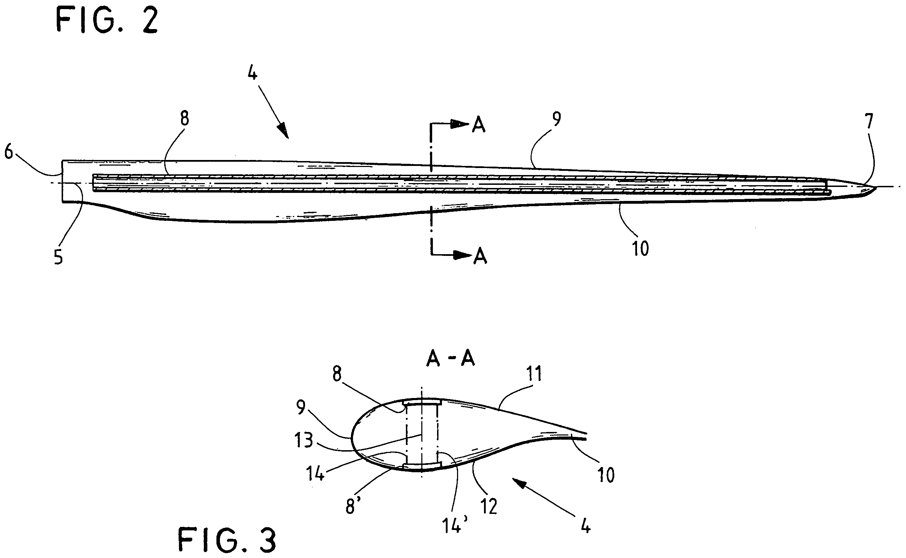

In Fig. 2 ist ein Rotorblatt 4 von oben schematisch dargestellt. Das Rotorblatt erstreckt sich in Längsrichtung der Längsachse 5 von einer Rotorblattwurzel 6 zu einer Rotorblattspitze 7. Ebenfalls in Längsrichtung auf der Längsachse 5 befindet sich ein Blattgurt 8, der während des Betriebs der Windenergieanlage 1 auf das Rotorblatt 4 wirkende Biegekräfte aufnimmt und über die Rotorblattwurzel 6 in die Rotornabe 3 einleitet.

Quer zur Längsachse 6 erstreckt sich das Rotorblatt 4 von einer Profilvorderkante 9 zu einer Profilhinterkante 10.

Der Bereich der Rotorblattwurzel 6 ist in Fig. 2 in etwa derjenige Bereich einschließlich des Übergangsbereiches, der von der Rotorblattwurzel 6 bis zu etwa dem Punkt reicht, an dem die Linie ansetzt, die zu dem Bezugszeichen für den Blattgurt 8 führt. In diesem Bereich ist das Rotorblatt 4 aerodynamisch nicht oder nur kaum wirksam.

In der Mitte des Rotorblatts 4 ist eine Schnittlinie A-A gezeigt. Das Querschnittsprofil des Rotorblatts 4 an dieser Schnittlinie A-A ist in Fig. 3 gezeigt. Darin ist erkennbar, dass das Rotorblatt eine obere Halbschale an der Druckseite 11 aufweist, die sich von der Profilvorderkante bis zur Profilhinterkante 10 erstreckt, sowie eine untere Halbschale an der Saugseite 12, die sich ebenfalls von der Profilvorderkante 9 bis zur Profilhinterkante 10 erstreckt. An der Position der Längsschnittebene 13 befinden sich in der oberen Halbschale und in der unteren Halbschale jeweils Blattgurte 8, 8', die aus Fasergelegen mit unidirektionaler Faserausrichtung in Längsrichtung des Rotorblatts 4 bestehen und hauptsächlich dafür verantwortlich sind, Biegebelastungen des Rotorblatts 4 zur Rotorblattwurzel 6 hin abzuleiten und damit den Rotor in Drehung zu versetzen. Beidseits der Blattgurte 8, 8' sind die Halbschalen von Druckseite 11 und Saugseite 12 über Stege 14, 14' miteinander verbunden, die das Querschnittsprofil weiter stabilisieren.

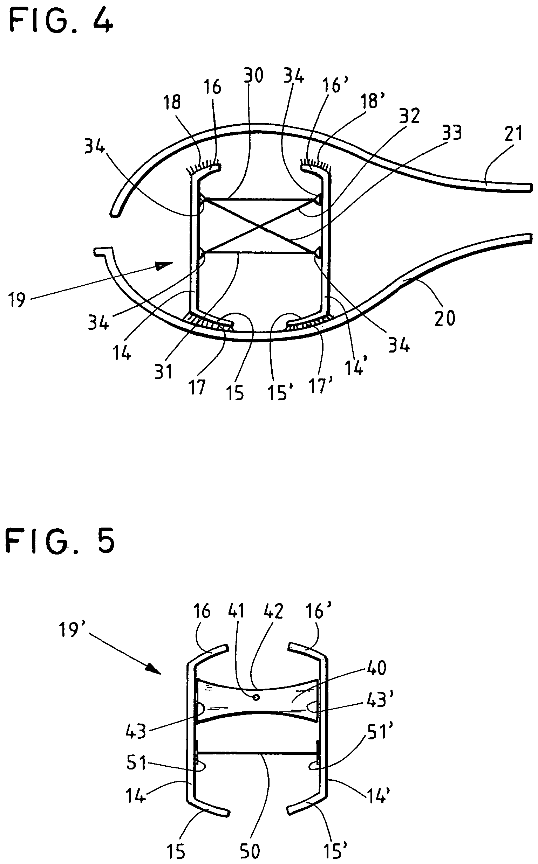

In Fig. 4 ist schematisch ein Querschnitt durch ein in der Herstellung befindliches Rotorblatt 4 dargestellt, mit einer ersten Halbschale 20 und einer zweiten Halbschale 21, von denen eine für eine Saugseite und eine für eine Druckseite des Rotorblatts vorgesehen ist. In der ersten unteren Halbschale 20 ist ein Stegpaket 19 mit Stegen 14, 14' eingesetzt, wobei die Stege 14, 14' untere Stegfüße 15, 15' und obere Stegfüße 16, 16' aufweisen, die Verklebungsflächen für die Halbschalen 20, 21 darstellen. Die unteren Stegfüße 15, 15' sind schon mittels Verklebungen 17, 17' mit der Innenseite der ersten Halbschale 20 verklebt. Die Verklebung kann beispielsweise in einem Kleberinjektionsverfahren unter Einsatz von wenig Klebstoff stattgefunden haben.

Die oberen Stegfüße 16, 16' sind mit Klebstoff 18, 18' versehen, auf die die zweite, obere Halbschale 21 noch aufgesetzt werden muss.

Das Stegpaket 19 umfasst mehrere Querverbindungseinrichtungen, nämlich in diesem Fall Querstreben 30, 31 und Diagonalstreben 32, 33, die jeweils mit Saugnäpfen 34 mit den Innenflächen der Stege lösbar verbunden sind. Die Streben 30 bis 33 können somit durch Lösen der Saugnäpfe 34 aus dem Innenraum zwischen den Stegen 14, 14' entfernt werden, so dass das Stegpaket 19 nach der Herstellung des Rotorblatts durch Schließen des Rotorblatts und Verkleben der Stege 14, 14' mit der zweiten Halbschale 21 aufgelöst werden kann.

Die Kombination aus Querstreben 30, 31 und Diagonalstreben 32, 33 stellt sicher, dass die Stege 14, 14' in der Position, in der sie durch die Querverbindungseinrichtungen 30 bis 33 zueinander ausgerichtet worden sind, fixiert bleiben, ohne verkippen zu können. Auf diese Weise wird sichergestellt, dass Toleranzen in der Stegpositionierung in der ersten Halbschale 20 und der zweiten Halbschale 21 eingehalten werden.

In Fig. 5 ist ein alternatives erfindungsgemäßes Stegpaket 19' im Querschnitt gezeigt. Die Stege 14, 14' sind in diesem Fall mittels zweier fest mit den Stegen 14, 14' verbundene Querverbindungseinrichtungen verbunden. Im oberen Bereich von Fig. 5 ist eine Sandwichplatte 40 mit einer Taillierung 42 dargestellt, die an den Seiten mit Verklebungen 43, 43' mit den Innenseiten der Stege 14, 14' fest verbunden ist. Die Taillierung 42 dient der Gewichtsreduktion, jedoch kann auch eine rechteckige Sandwichplatte 40 oder eine Platte aus einem anderen Material den gleichen Zweck erfüllen. Die Sandwichplatte 40 weist zentral eine Tragöse 41 oder Bohrung auf, in die ein Halteelement einer Stegpositioniervorrichtung eingreifen kann, um das Stegpaket 19' zu erfassen und als Ganzes in eine Halbschale einzusetzen.

Im unteren Bereich von Fig. 5 ist eine alternative taillierte Querverbindungseinrichtung dargestellt, nämlich eine Doppel-T-Strebe 50 mit seitlichen T-Füßen 51, 51'. Die T-Füße 51, 51' sind wiederum flächig mit den Stegen 14, 14' verbunden. Die Doppel-T-Struktur verhindert ebenfalls ein Verkippen der Stege 14, 14' gegeneinander. Diese Form stellt im Rahmen der vorliegenden Erfindung eine extreme Form einer Taillierung dar. Eine solche Doppel-T-Strebe 50 ist vorzugsweise aus einem festen Material, beispielsweise einem Metall.

Die zuvor beschriebenen Stegpakete 19, 19' können durch eine Positioniervorrichtung, die sehr einfach gestaltet ist, nämlich als Kran, in die Hauptform mit der unteren Halbschale des Rotorblatts gehoben werden und anschließend mit den Schalen verklebt werden.

Es können auch im Wurzelbereich lösbar Querverbindungseinrichtungen und im Blattspitzenbereich leichtgewichtige, beispielsweise aus Kunststoff hergestellte, permanent eingefügte Querverbindungseinrichtungen verwendet werden. Beide Arten von Querverbindungseinrichtungen können mit Haltemitteln, beispielsweise Ösen, für einen solchen Kran ausgerüstet sein.

Im blattspitzenseitigen Bereich können auch wiederum herausnehmbare Querverbindungseinrichtungen verwendet werden, die vor dem Schließen des Rotorblatts entnommen werden, was möglich ist, da in diesem Bereich die Höhe der Stege gering ist und ein Verkippen der Stege in diesem Bereich noch nicht aus den Toleranzen herausführt.

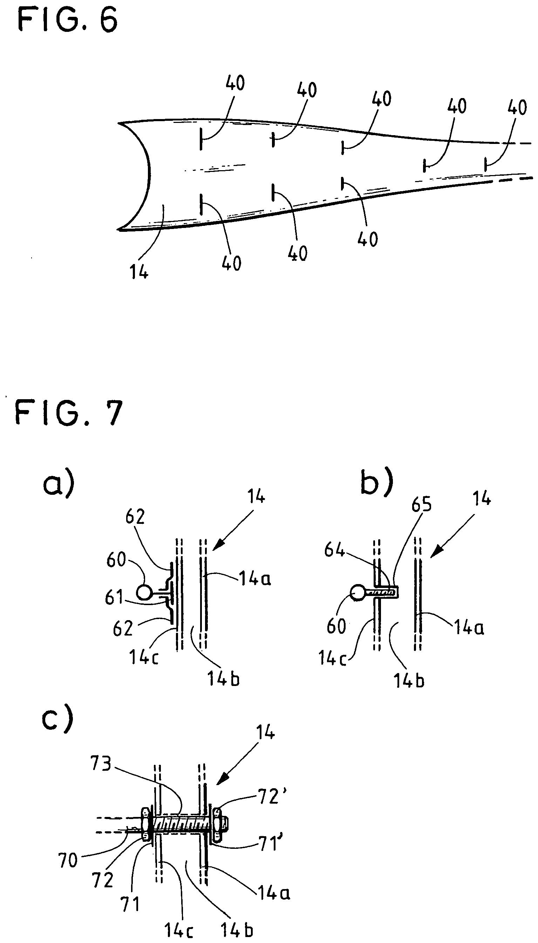

In Fig. 6 ist schematisch ein Stegpaket von einer Seite im Ausschnitt dargestellt. Die seitliche Ansicht ist auf einen Steg 14 des Stegpakets gerichtet. Der Steg 14 ist im linken Teil der Fig. 6 im blattwurzelnahen Bereich dargestellt, wo der Steg 14 eine Aussparung aufweist. In Richtung auf die Blattspitze hin, also in Fig. 6 auf der rechten Seite der Figur 6, sind im Verlauf des Steges 14 mehrere Querverbindungselemente, nämlich in diesem Fall Sandwichplatten 40 angeordnet, die in dem Bereich, in dem der Steg 14 hoch ist, sowohl im oberen als auch im unteren Teil des Steges angeordnet sind, während im schmaleren Bereich des Steges 14 in Richtung auf die Blattwurzelspitze zu eine Reihe von Querverbindungselementen angeordnet ist. Auch die Abstände zwischen den Querverbindungselementen können im blattspitzenseitigen Bereich des Rotorblatts größer gewählt werden als im in Fig. 6 gezeigten blattwurzelseitigen Bereich, da die Masse und der Hebelarm, d.h. die Höhe der Stege 14, 14' im blattspitzenseitigen Bereich geringer ist als im blattwurzelseitigen Bereich.

In Fig. 7a) bis 7c) sind drei verschiedene Arten von Verbindungsmitteln an einem Steg 14 dargestellt. Dem Steg 14 ist in Figuren 7a), 7b) und 7c) gemeinsam, dass er jeweils aus einem Kernmaterial 14b hergestellt ist, das beidseitig von jeweils einer Laminatlage 14a, 14c bedeckt ist. Das Kernmaterial ist beispielsweise ein PET-Schaum oder ein PVC-Schaum. Die Laminatlage besteht aus einem oder mehreren Lagen von Fasermaterial, beispielsweise Glasfasern, die in eine Harzmatrix eingebettet ist.

In Fig. 7a) ist auf einer Seite des Steges 14 eine Verbindungsöse 60, die eine Fußplatte 61 aufweist, mittels zweier Laminatlagen 62 an den Steg 14 anlaminiert. Ein Haken einer Querverbindungseinrichtung kann in diese Verbindungsöse 60 eingreifen.

In Fig. 7b) ist eine alternative Ausführungsform einer Verbindung dargestellt, wobei der Steg 14 ein Sackloch 65 aufweist, in das eine Verbindungsöse 60 mit einer Schraube 64 eingeschraubt ist. Diese Verbindungsöse 60 mit der Schraube 64 kann aus dem Sackloch 65 auch wieder entfernt werden.

In Fig. 7c) weist der Steg 14 eine durchgehende Öffnung 73 auf, durch die ein Ende eines Bolzens 70 mit einem Außengewinde hindurchgesteckt ist. Beidseitig des Steges ist auf das Außengewinde des Bolzens 70 jeweils eine Unterlegscheibe 71, 71' sowie eine Mutter 72, 72' aufgesteckt bzw. aufgeschraubt, womit der Bolzen 70 am Steg 14 fixiert wird. Durch Lösen der Muttern 72, 72' ist der Bolzen 70 auch wieder von dem Steg 14 entfernbar.

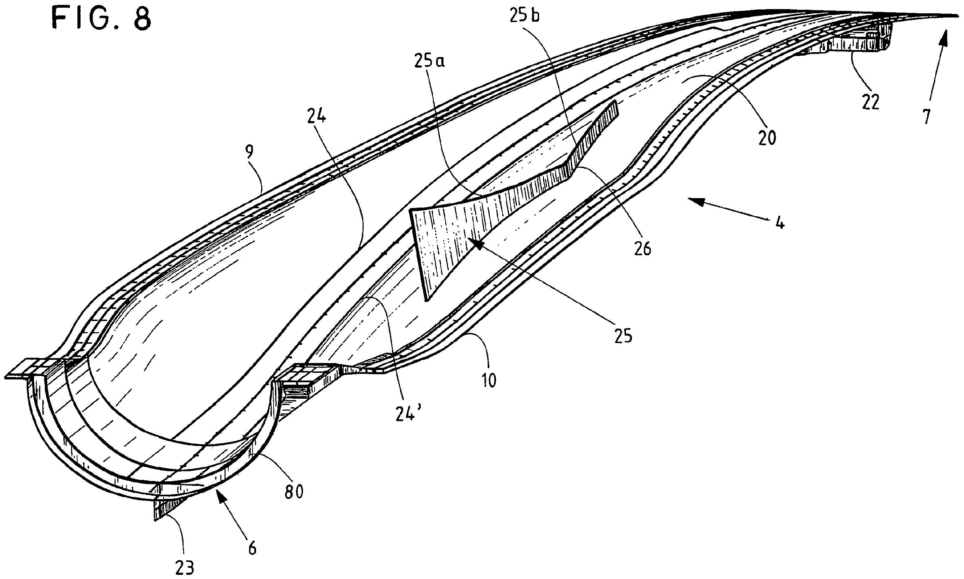

In Fig. 8 ist eine erste, untere Halbschale 20 eines Rotorblatts 4 in einer Hauptform 80 für die erste, untere Halbschale 20 schematisch perspektivisch dargestellt. Die Hauptform 80 erstreckt sich von der Blattwurzel 6 bis zur Blattspitze 7. In der Hauptform 80 ist das Schalenmaterial der ersten, unteren Halbschale 20 eingefügt. Die Teile der Form an der Profilvorderkante 9 und an der Profilhinterkante 10 sind ebenfalls kenntlich gemacht. Die Hauptform 80 ruht auf einem längserstreckten Lagerblock 23 und einem quer gelegenen Lagerblock 22 im Blattspitzenbereich.

Längserstreckt im Inneren der ersten, unteren Halbschale 20 sind Stegpositionslinien 24, 24' gezeigt, die die Linien markieren, an die die Stege 14, 14' anzuordnen sind. Zusätzlich hierzu ist ein Hinterkantensteg 25 oder TEP-Steg dargestellt, der bei größeren Rotorblättern zum Einsatz kommt. Dieser Hinterkantensteg 25 weist einen Knick 26 auf, so dass der Hinterkantensteg 25 ein blattwurzelseitiges Hinterkantenstegteil 25a und ein blattspitzenseitiges Hinterkantenstegteil 25b aufweist. Das blattwurzelseitige Hinterkantenstegteil 25a wird in Richtung auf die Rotorblattspitze 7 zu deutlich schmaler, was dem Verlauf des Profils in Längsrichtung des Rotorblatts 4 entspricht. Der Knick 26 des Hinterkantenstegs 25 ist notwendig, da der Abstand zwischen Profilvorderkante 9 und Profilhinterkante 10 des Rotorblatts 4 in Richtung auf die Rotorblattspitze 7 zu hin abnimmt. Wegen des Knicks 26 wird der Hinterkantensteg 25 üblicherweise in zwei Teilen gefertigt und anschließend zusammengeklebt. Der Hinterkantensteg 25 kann Teil eines Stegpakets sein, also gegenüber dem hinteren Hauptsteg 14' abgestützt sein, oder er kann mittels einer eigenen Stützvorrichtung gegenüber der ersten, unteren Halbschale 20 des Rotorblatts 4 stabilisiert sein.

### Bezugszeichenliste

- 1: Windenergieanlage
- 2: Turm
- 3: Rotornabe
- 4: Rotorblatt
- 5: Längsachse
- 6: Rotorblattwurzel
- 7: Rotorblattspitze
- 8, 8': Blattgurt
- 9: Profilvorderkante
- 10: Profilhinterkante
- 11: Druckseite
- 12: Saugseite
- 13: Längsschnittebene
- 14, 14': Steg
- 14a, 14c: Laminatlage
- 14b: Kernmaterial
- 15, 15': Stegfuß
- 16, 16': Stegfuß
- 17, 17': Verklebung
- 18, 18': Klebstoff
- 19, 19': Stegpaket
- 20: erste Halbschale
- 21: zweite Halbschale
- 22, 23: Lagerblock
- 24, 24': Stegpositionslinie
- 25: Hinterkantensteg
- 25a: blattwurzelseitiges Hinterkantenstegteil
- 25b: blattspitzenseitiges Hinterkantenstegteil
- 26: Knick
- 30, 31: Querstrebe
- 32, 33: Diagonalstrebe
- 34: Saugnapf
- 40: Sandwichplatte
- 41: Tragöse
- 42: Taillierung
- 43, 43': Verklebung
- 50: Doppel-T-Strebe
- 51, 51': T-Fuß
- 60: Verbindungsöse
- 61: Fußplatte
- 62: Laminatlage
- 64: Schraube
- 65: Sackloch
- 70: Bolzen mit Außengewinde
- 71, 71': Unterlegscheibe
- 72, 72': Mutter
- 73: durchgehende Öffnung
- 80: Hauptform

## Patentansprüche

1. Verfahren zum Herstellen eines Rotorblatts (4) einer Windenergieanlage (1), wobei das Rotorblatt (4) aus Halbschalen (20, 21) für eine Saugseite (12) und eine Druckseite (11) hergestellt wird, die im Inneren des Rotorblatts (4) durch wenigstens zwei in Längsrichtung des Rotorblatts (4) verlaufende Stege (14, 14', 25) miteinander verbunden werden, wobei die Stege (14, 14', 25) zunächst auf einer ersten Halbschale (20) positioniert und mit der ersten Halbschale (20) verklebt werden und anschließend das Rotorblatt (4) geschlossen wird, wobei eine zweite Halbschale (21) auf die erste Halbschale (21) mit den Stegen (14, 14', 25) oder die erste Halbschale (20) mit den Stegen (14, 14', 25) auf die zweite Halbschale (21) aufgesetzt wird, die Halbschalen (20, 21) miteinander verklebt werden und die Stege (14, 14', 25) mit der zweiten Halbschale (21) verklebt werden, **dadurch gekennzeichnet, dass** die Stege (14, 14', 25) mittels einer Mehrzahl von Querverbindungseinrichtungen (30 - 33, 40, 50) zu einem verkippungsstabilen Stegpaket (19, 19') verbunden werden, bevor die Stege (14, 14', 25) auf der ersten Halbschale (20) positioniert werden, wobei einige oder alle Querverbindungseinrichtungen (30 - 33, 40, 50) nach dem Schließen des Rotorblatts (4) wieder entfernt werden.

2. Verfahren nach Anspruch 1, **dadurch gekennzeichnet, dass** die Stege (14, 14', 25) gemeinsam als miteinander verbundenes Stegpaket (19, 19') mittels einer Stegpositioniervorrichtung in der ersten Halbschale (20) positioniert werden, wobei insbesondere die Herstellung des Stegpakets (19, 19') außerhalb des Rotorblatts (4) erfolgt.

3. Verfahren nach Anspruch 1 oder 2, **dadurch gekennzeichnet, dass** die Verklebung der Stege (14, 14', 25) mit den Halbschalen (20, 21) als Verklebung mit in Längsrichtung der Halbschalen (20, 21) angeordneten Blattgurten (9, 9') erfolgt.

4. Stegpaket (19, 19') für ein Rotorblatt (4) einer Windenergieanlage (1), umfassend wenigstens zwei in Längsrichtung des Rotorblatts (4) verlaufende Stege (14, 14', 25) und eine Mehrzahl von Querverbindungseinrichtungen (30 - 33, 40, 50), mit denen die Stege (14, 14', 25) verkippsicher miteinander verbunden oder verbindbar sind, wobei wenigstens ein Teil der Querverbindungseinrichtungen (30 - 33, 40, 50) und die Stege (14, 14', 25) miteinander lösbar verbindbar ausgestaltet sind, **dadurch gekennzeichnet, dass** wenigstens ein Teil der Querverbindungseinrichtungen (30 - 33, 40, 50) Haltemittel (41) für eine Stegpositioniervorrichtung aufweist.

5. Stegpaket (19, 19') nach Anspruch 4, **dadurch gekennzeichnet, dass** die Verbindungen mittels Saugnäpfen (34), Schrauben (64), Bolzen (70) und/oder Haken und Ösen (60) hergestellt oder herstellbar sind, insbesondere mit an- oder einlaminierten Verbindungseinrichtungen (61), Sacklöchern (65) und/oder durchgehenden Öffnungen (73) an und/oder in den Stegen (14, 14', 25).

6. Stegpaket (19, 19') nach Anspruch 4 oder 5, **dadurch gekennzeichnet, dass** wenigstens ein Teil der Querverbindungseinrichtungen (30 - 33, 40, 50) fest mit den Stegen (14, 14', 25) verbunden ist, insbesondere mittels Verkleben und/oder An- oder Einlaminieren.

7. Stegpaket (19, 19') nach einem der Ansprüche 4 bis 6, **dadurch gekennzeichnet, dass** die Querverbindungseinrichtungen (30 - 33, 40, 50) als Metallstreben, Kunststoffstreben, Abstandhalter aus Metall oder Kunststoff und/oder als rechteckige oder taillierte Flachkörper ausgebildet sind, insbesondere als Sandwichplatten (40) mit Faserverbundstoffen und Kernmaterial.

8. Stegpaket (19, 19') nach einem der Ansprüche 4 bis 7, **dadurch gekennzeichnet, dass** zur Sicherung gegen eine Verkippung der Stege (14, 14', 25) wenigstens ein Teil der Querverbindungseinrichtungen (32, 33) im Wesentlichen diagonal und/oder kreuzweise diagonal zwischen den Stegen (14, 14', 25) angeordnet wird.

9. Stegpaket (19, 19') nach einem der Ansprüche 4 bis 8, **dadurch gekennzeichnet, dass** zusätzlich zu zwei Hauptstegen (14, 14') ein dritter Steg (25) umfasst ist, der zur Profilhinterkante (10) hin angeordnet ist und im Wesentlichen parallel zu den Hauptstegen (14, 14') verläuft.

10. Rotorblatt (4) einer Windenergieanlage (1) mit einem Stegpaket (19, 19') nach einem der Ansprüche 4 bis 9, insbesondere hergestellt oder herstellbar in einem Verfahren nach einem der Ansprüche 1 bis 3.

11. Windenergieanlage (1) mit einem oder mehreren Rotorblättern (4) nach Anspruch 10.

## Claims

1. A method for manufacturing a rotor blade (4) of a wind turbine (1), wherein the rotor blade (4) is produced from half shells (20, 21) for a suction side (12) and a pressure side (11) that are joined to each other in the interior of the rotor blade (4) by at least two webs (14, 14', 25) running in the longitudinal direction of the rotor blade (4), wherein the webs (14, 14', 25) are initially positioned on a first half shell (20) and glued to the first half shell (20), and then the rotor blade (4) is closed, wherein a second half shell (21) is placed on the first half shell (21) with the webs (14, 14', 25), or the first half shell (20) with the webs (14, 14', 25) is placed on the second half shell (21), the half shells (20, 21) are glued to each other, and the webs (14, 14', 25) are glued to the second half shell (21), **characterized in that** the webs (14, 14', 25) are joined into a non-tipping web assembly (19, 19') by means of a plurality of cross-connecting devices (30 - 33, 40, 50) before the webs (14, 14', 25) are positioned on the first half shell (20), wherein some or all cross-connecting devices (30 - 33, 40, 50) are removed after closing the rotor blade (4).

2. The method according to claim 1, **characterized in that** the webs (14, 14', 25) are jointly positioned by means of a web positioning apparatus as a joined-together web assembly (19, 19') in the first half shell (20), wherein in particular the web assembly (19, 19') is produced outside of the rotor blade (4).

3. The method according to claim 1 or 2, **characterized in that** the adhesion of the webs (14, 14', 25) to the half shells (20, 21) is carried out as an adhesion to blade belts (9, 9') arranged in the longitudinal direction in the half shell (20, 21).

4. A web assembly (19, 19') for a rotor blade (4) of a wind turbine (1) comprising at least two webs (14, 14', 25) that run in the longitudinal direction of the rotor blade (4), and a plurality of cross-connecting devices (30 - 33, 40, 50), by means of which the webs (14, 14', 25) are nontippably connected or connectable to each other, wherein at least part of the cross-connecting devices (30 - 33, 40, 50) and the webs (14, 14', 25) are designed to be releasably connectable to each other, **characterized in that** at least part of the cross-connecting devices (30 - 33, 40, 50) have holding means (41) for a web positioning device.

5. The web assembly (19, 19') according to claim 4, **characterized in that** the connections are or can be made by means of suction cups (34), screws (64), bolts (70) and/or hooks and eyes (60), in particular with surface- or interior-laminated connecting devices (61), blind holes (65) and/or through holes (73) in and/or through the webs (14, 14', 25).

6. The web assembly (19, 19') according to claim 4 or 5, **characterized in that** at least part of the cross-connecting devices (30 - 33, 40, 50) is securely joined to the webs (14, 14', 25), in particular by adhesion or surface or interior lamination.

7. The web assembly (19, 19') according to one of claims 4 to 6, **characterized in that** the cross-connecting devices (30 - 33, 40, 50) are designed as metal braces, plastic braces, spacers of metal or plastic, and/or rectangular or waisted flat bodies, in particular sandwich plates (40) with fiber composites and core material.

8. The web assembly (19, 19') according to one of claims 4 to 7, **characterized in that** to prevent the webs (14, 14', 25) from tipping, at least part of the cross-connecting devices (32, 33) are arranged substantially diagonally, and/or crosswise diagonally between the webs (14, 14', 25).

9. The web assembly (19, 19') according to one of claims 4 to 8, **characterized in that** in addition to the two main webs (14, 14'), a third web (25) is comprised that is arranged toward the profile rear edge (10) and runs substantially parallel to the main webs (14, 14').

10. A rotor blade (4) of a wind turbine (1) with a web assembly (19, 19') according to one of claims 4 to 9, that is in particular produced or producible in a method according to one of claims 1 to 3.

11. A wind turbine (1) having one or more rotor blades (4) according to claim 10.

## Revendications

1. Procédé de fabrication d'une pale (4) d'une éolienne, dans lequel la pale est réalisée à partir de demi-coques (20, 21) pour un côté d'aspiration (12) et d'un côté de pression (11), lesquelles demi-coques sont reliées l'une à l'autre au sein de la pale (4) au moyen d'au moins deux éléments de liaison (14, 14', 25) s'étendant dans le sens longitudinal de la pale (4), les éléments de liaison (14, 14', 25) étant d'abord positionnés sur une première demi-coque (20) et reliés à la première demi-coque (20) par collage, la pale (4) étant ensuite fermée, une deuxième demi-coque (21) étant reliée à la première demi-coque (20) au moyen des éléments de liaison (14, 14', 25), ou la première demi-coque (20) est reliée à la deuxième demi-coque (21) au moyen des éléments de liaison (14, 14', 25), les demi-coques (20, 21) étant collées l'une à l'autre et les éléments de liaison (14, 14', 25) étant collés à la deuxième demi-coque (21), **caractérisé en ce que** les éléments de liaison (14, 14', 25) d'un ensemble formant élément de liaison (19, 19') sont reliés au moyen d'une pluralité d'organes de liaison transversale (30 - 33, 40, 50) d'une façon stables à l'égard d'un basculement, avant que les éléments de liaison (14, 14', 25) soient positionnés sur la première demi-coque (20), une partie ou la totalité des dispositifs de liaison transversale (30 - 33, 40, 50) étant aptes à être retirés avant la fermeture de la pale (4).

2. Procédé selon la revendication 1, **caractérisé en ce que** les éléments de liaison (14, 14', 25) sont positionnés ensemble dans la première demi-coque (20) sous la forme d'un ensemble d'éléments de liaison (19, 19') reliés entre eux au moyen d'un dispositif de positionnement d'éléments de liaison, en particulier la fabrication des éléments de liaison (19, 19') étant réalisée à l'extérieur de la pale (4).

3. Procédé selon la revendication 1 ou la revendication 2, **caractérisé en ce que** le collage des éléments de liaison (14, 14', 25) avec les demi-coques est réalisé sous la forme d'un collage avec des bandes de tôle (9 - 9') agencées dans la direction longitudinale des demi-coques (20, 21).

4. Ensemble formant élément de liaison (19, 19') pour une pale (4) d'une éolienne (1) comprenant au moins deux éléments de liaison (14, 14', 25) s'étendant dans la direction longitudinale de la pale (4) et une pluralité d'organes de liaison transversale (30 - 33) au moyen de laquelle les éléments de liaison (14, 14', 25) sont reliés ou aptes à être reliés les uns aux autres d'une manière résistante au basculement, au moins une partie des organes de liaison transversale (30 - 33, 40, 50) et les éléments de liaison (14, 14', 25, 50) étant reliés les uns aux autres, **caractérisé en ce qu'**au moins une partie des organes de liaison transversale (30 - 33, 40, 50) comporte des moyens de maintien (41) pour un dispositif de positionnement des éléments de liaison.

5. Ensemble formant élément de liaison (19, 19') selon la revendication 4, dans lequel les assemblages sont réalisés ou aptes à être réalisés au moyen de ventouses (34), de vis (64), de boulons (70) et/ou de crochets et d'oeillets (60), en particulier avec des moyens de connexion ou de liaison (61) laminés ou stratifiés, des trous borgnes (65) et / ou des ouvertures traversantes (73) sur et / ou dans les éléments de liaison (14, 14', 25).

6. Ensemble formant élément de liaison selon la revendication 4 ou la revendication 5, dans lequel au moins une partie des organes de liaison transversale (30 - 33, 40, 50) est reliée de manière fixe aux éléments de liaison (14, 14', 25), en particulier par collage et / ou laminage ou stratification.

7. Ensemble formant élément de liaison (19, 19') selon l'une quelconque des revendications 4 à 6, **caractérisé en ce que** les organes de liaison transversale (30 - 33, 40, 50) sont sous la forme de renforts métalliques, de renforts en matière plastique, d'entretoises en métal ou en matière plastique et / ou sous forme de corps plat rectangulaires ou cintrés, en particulier sous la forme plaques (40) à structure sandwich ayant des composites de fibres et un matériau formant une âme.

8. Ensemble formant élément de liaison selon l'une des revendications 4 à 7, **caractérisé en ce que**, pour sécuriser les éléments de liaison (14, 14', 25) contre le basculement, au moins une partie des organes de liaison transversale (32, 33) est disposée entre les éléments de liaison (14, 14', 25) sensiblement en diagonale et / ou en diagonale d'une façon transversale.

9. Ensemble formant élément de liaison (19, 19') selon l'une des revendications 4 à 8, **caractérisé en ce qu'**un troisième élément de liaison (25) est agencé en plus des deux éléments de liaison principaux (14, 14'), qui est agencé jusqu'au bord de fuite (10) et s'étend sensiblement parallèlement aux éléments de liaison (14, 14') principaux.

10. Pale (4) d'une éolienne (1) ayant un ensemble formant élément de liaison (19, 19') selon l'une quelconque des revendications 4 à 9, en particulier réalisé ou apte à être réalisé par un procédé selon l'une quelconque des revendications 1 à 3.

11. Éolienne (1) ayant une ou plusieurs pales (4) selon la revendication 10.
